# EUROPEAN PATENT APPLICATION

(11) **EP 0 762 087 A2**
(43) Date of publication of application: **12.03.1997**
(21) Application number: 96114017.5
(22) Date of filing: 02.09.1996
(51) Int. Cl.: G01F 15/18

(54) **Adjustable and detachable connecting device, particularly adapted for gas meters and the like**

(30) Priority: 07.09.1995 IT MI951881
(71) Applicant: GREINER S.P.A., I-25065 Lumezzane S.S. (Brescia) (IT)
(72) Inventor: Rovelli, Attilia, I-22040 Lurago d'Erba (IT)
(74) Representative: Modiano, Guido, Dr.-Ing.

(57) **Abstract**

A detachable connecting device, particularly adapted for gas meters and the like, comprising connecting means (1) having a first end (2) and a second end (3), the first end (2) being connectable to the outlet of a gas meter (7), the second end (3) being connectable to a gas distribution pipe in output from the meter (7), the connecting means (1) being furthermore connectable to fixing means (12,13) that fix the connecting means (1), and the meter (7) rigidly coupled thereto, to a gas distribution manifold (11).

## Description

The present invention relates to an adjustable and detachable connecting device, particularly adapted for supporting gas meters and connecting them to the gas distribution manifold.

Gas is normally distributed in buildings by means of manifolds or distribution systems which, by branching from the main external gas distribution network, which is usually underground, enter the buildings to reach the individual users. Each user has a meter for measuring the amount of gas being consumed.

Gas meters are currently placed on appropriately provided brackets or shelves that are fixed to a wall and are then connected to the gas distribution manifold by a coupling that allows gas to flow from the manifold to the meter and then to the gas distribution outlet pipe.

Gas meters are generally arranged inside the individual dwellings either on their balconies or in batteries located on the ground floor of said dwellings.

A drawback of this solution is the fact that it is necessary to build, in a wall, a bracket or shelf to support said gas meters or a niche in order to accommodate the meter.

Furthermore, the supporting shelf or niche for the meter must be located proximate to the gas distribution manifold so as to avoid excessively long connecting lines to reach said manifold.

Furthermore, disassembling a gas meter for repair is awkward.

A principal aim of the present invention is therefore to provide a detachable connecting device that allows the direct connection of a gas meter to the gas distribution manifold with the supply outlet towards the user.

Within the scope of this aim, an object of the present invention is to provide a detachable connecting device that allows to connect gas meters, of any size and having any center distance, directly to a primary gas distribution manifold.

Another object of the present invention is to provide a detachable connecting device that allows to adjust the position of the gas meter connected to the gas distribution manifold.

Another object of the present invention is to provide a detachable connecting device that allows to measure the gas pressure in a simple and functional manner.

Another object of the present invention is to provide a detachable connecting device that is highly reliable and relatively easy to manufacture at competitive costs.

This aim, these objects, and others that will become apparent hereinafter are achieved by a detachable connecting device, particularly adapted for gas meters and the like, characterized in that it comprises connecting means having a first end and a second end, said first end being connectable to the outlet of a gas meter, said second end being connectable to a gas distribution pipe in output from said meter, said connecting means being furthermore connectable to fixing means adapted to fix said connecting means, and said meter rigidly coupled thereto, to a gas distribution manifold.

Further characteristics and advantages of the invention will become apparent from the following detailed description of a preferred but not exclusive embodiment of the device according thereto, illustrated only by way of non-limitative example in the accompanying drawings, wherein:
figure 1 is a vertical sectional view of the detachable connecting device according to the invention in the assembled configuration;
figure 2 is an exploded perspective view of the connecting device according to the invention;
figure 3 is a sectional view of the various elements of figure 2 that constitute the connecting device according to the invention;
figure 4 is a front view of the detachable connecting device according to the invention, applied to two gas meters that are directly connected to a distribution manifold;
figure 5 is a plan view of the range of positions that can be assumed by the coupling constituting the outlet of the gas meter, when said coupling is connected to the detachable connecting device according to the invention;
figure 6 is a partial vertical sectional view, illustrating a valve device connected to the detachable connecting device according to the invention.

With reference to the above figures, the device according to the invention comprises connecting means that are advantageously constituted by an L-shaped tubular body 1 having a first end 2 and a second end 3 that are externally threaded.

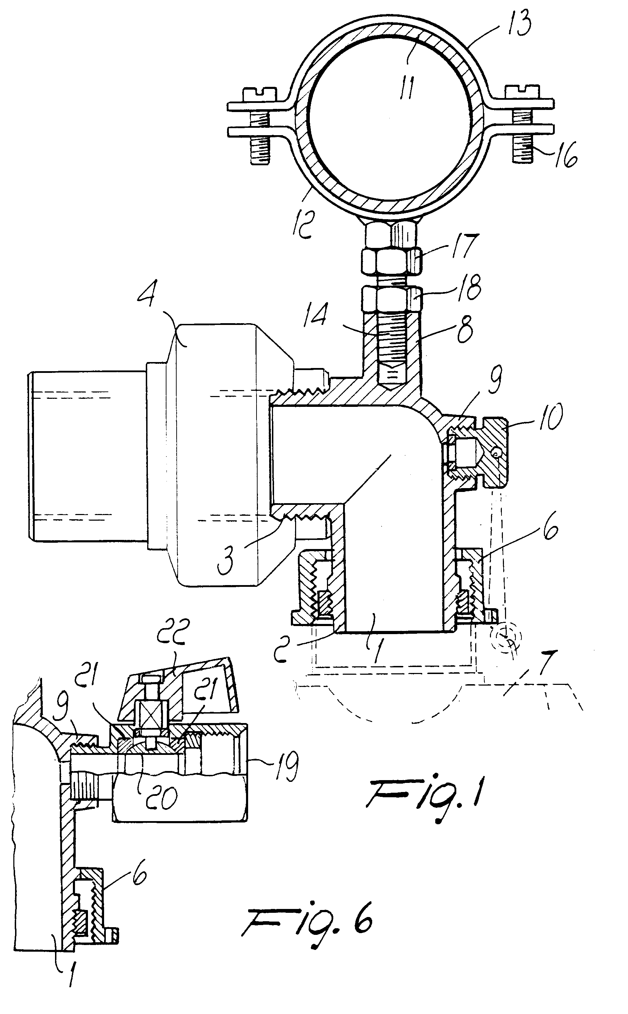

A ring 5 is screwed on the first end 2 and constitutes an abutment element for a flanged locking crown 6 that allows connection, by screwing, to a gas meter 7 (shown in dashed lines in figure 1).

A dielectric coupling 4 can be screwed on the second end 3 and constitutes the gas outlet path by which the gas reaches the user. Said dielectric coupling 4 has the purpose of eliminating any transmission of electricity to the gas distribution system and vice versa.

The L-shaped tubular body 1 has an internally threaded cylindrical extension 8 in a position lying opposite to the first end 2. Said cylindrical extension 8 is conveniently provided so as to be monolithic with the body 1.

Finally, the tubular body 1 is provided, in the opposite position with respect to the second end 3, with an internally threaded venting opening 9 that is closed by a threaded plug 10 that screws in said opening 9.

The plug 10 is preset for sealing with lead for safety reasons and to avoid tampering.

The cylindrical extension 8 is internally threaded so that it can connect by screwing to fixing means that are appropriately constituted for example by a fixing collar shaped so as to allow coupling to a gas distribution manifold 11.

The fixing collar is divided into two halves 12 and 13, each whereof has a curved central portion that blends into two flat lateral portions. The curved portions of the two halves 12 and 13 of the locking collar are adapted to enclose the gas distribution manifold 11 between them. The first half 12 has a threaded pin 14 that screw-couples in said cylindrical extension 8, allowing the tubular body 1 to be adjusted as regards its distance from the gas distribution manifold 11.

The flat lateral portions of the first half 12 and of the second half 13 that constitute the locking collar protrude laterally from the distribution manifold 11 when the fixing collar is arranged around said manifold 11; each portion has a hole 15 that allows the passage of a self-threading screw having the purpose of connecting the two halves 12 and 13 of the fixing collar to each other so as to clamp the distribution manifold 11 between them. Two screws 16 are therefore provided.

In order to adjust and maintain the distance of the tubular body 1 from the distribution manifold 11, a first nut 17 is screwed on the threaded pin 14 so as to lock against the end part of the threaded pin 14 in contact with the curved portion of the half 12 of the fixing collar.

A second nut 18 is screwed on said threaded pin 14 so as to lock against the cylindrical extension 8 of the tubular body 1, thus providing an adjustment of the distance of the tubular body 1 from the distribution manifold 11.

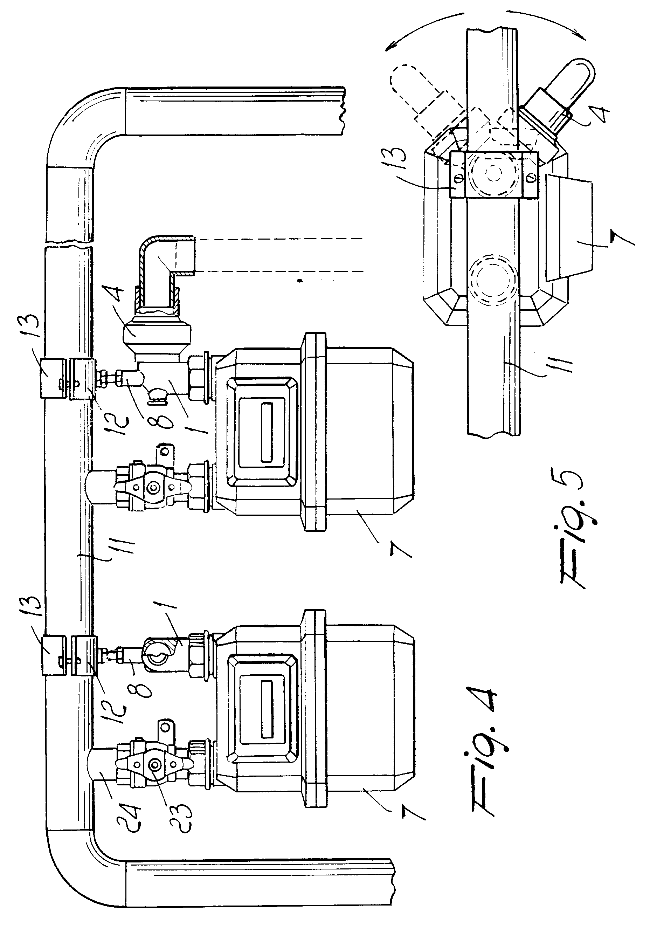

The tubular body 1 is then screwed, by means of its cylindrical extension 8, on the threaded pin 14 and is then locked in the desired position by the second nut 18. It is thus possible to orientate the tubular body 1 at will on the threaded pin 14, which is then rigidly coupled to the distribution manifold 11. This possibility is shown in figure 5, which illustrates the possible angular orientations that can be assumed by the tubular body 1 in relation to the axis of the gas distribution manifold 11.

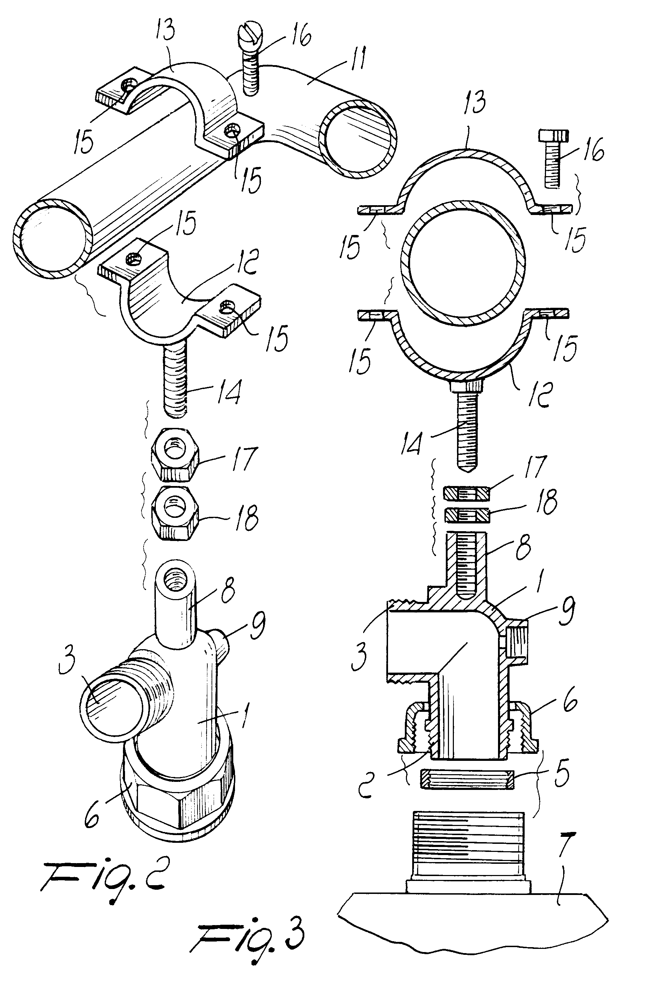

Figure 4 illustrates two gas meters 7 that are directly connected to the gas distribution manifold 11 by means of the connecting device according to the invention. This figure also shows, in relation to the two meters 7, two possible positions that can be assumed for example by the dielectric coupling 4 screwed on the opening 3 of the tubular body 1.

With reference now to figure 6, the internally threaded venting opening 9 can have, instead of the plug 10, a cock 19 provided with a valve, advantageously constituted by a ball valve 20.

The cock 19 is provided with an actuation lever 22 for opening and closing it. Said lever 22 thus allows to open or close the internally threaded venting opening 9 by acting on the ball valve 20, which abuts against gaskets 21. In figure 6, the ball valve 20 is shown in the open position.

The purpose of this cock 19 is to allow to directly measure the gas pressure inside the tubular body 1 and thus measure the pressure of the gas that flows through the dielectric coupling 4.

In order to measure the gas pressure inside the tubular body 1 it is possible to use a pressure gauge (not shown in the figures) that is connected, when required, to the cock 19 or can be left permanently fixed on the cock 19.

With reference to the above figures, the use of the connecting device according to the invention is as follows.

The connecting device is used to connect the gas meter 7 directly to the distribution manifold 11.

As shown in figure 4, the gas meter 7 is connected to a branch 24 of the gas distribution manifold 11 that allows gas to enter the meter 7. Said incoming flow is regulated by an appropriate cock 23 that allows to interrupt the gas delivery.

After flowing inside the meter 7, the gas flows in the tubular body 1 that is connected to the meter by means of the flanged locking crown 6 that screws on the meter 7.

The cylindrical extension 8 of the tubular body 1 instead allows to connect the tubular body 1, and therefore the meter 7 rigidly coupled thereto, to the distribution manifold 11 by means of the fixing collar 12 and 13 and the corresponding pin 14, whereon the cylindrical extension 8 of the tubular body 1 is screwed.

In this manner it is possible to directly connect meters of different sizes to the distribution manifold 11, since it is the fixing collar 12 and 13 that allows connection to said manifold.

Therefore, in case of center distance variations between the gas inlet of the meter and the gas outlet of said meter it is sufficient to move the fixing collar 12 and 13 horizontally on the distribution manifold 11 in order to adapt the connection to said center distance change.

This method for connecting the meter 7 to the distribution manifold 11 therefore eliminates the need to replace the assembly formed by the dielectric coupling 4 and by the pipe connected thereto, which is used to convey the gas that leaves the meter.

The meter 7 can also be adjusted as regards its distance from the distribution manifold 11. This adjustment is performed by screwing or unscrewing the tubular body 1, which is rigidly coupled to the meter 7, on the threaded pin 14 and then locking it in the desired position by means of the second locking nut 18.

Figure 5 is a view of the angular orientation range available for the dielectric coupling 4, which takes advantage of the fact that the tubular body 1 to which it is screwed is in turn screwed to the threaded pin 14.

The fact of being able to vary the angle of the dielectric coupling considerably widens the possibilities of connecting the pipe that conveys the outgoing gas to the internal connecting point.

The threaded opening 9 of the tubular body 1 constitutes a vent for said tubular body. A cock 19, provided with a ball valve 20, can be connected to said opening 9. Said cock 19 is advantageous during the measurement of the gas pressure in output from the meter 7, since it allows to avoid interrupting the gas flow inside the tubular body 1, without therefore having to act on the cock 23 and then disassembling the outlet of the meter to connect a pressure measurement instrument thereto. By virtue of the connecting device according to the invention, it is sufficient to act on the cock 19 that controls the corresponding ball valve 20 and then directly connect a pressure gauge, saving a considerable amount of time and eliminating the possibility of gas leaks.

In practice it has been observed that the device according to the invention fully achieves the intended aim, since it allows to connect a gas meter directly to the distribution manifold, avoiding the need to build specifically provided brackets or niches.

It has furthermore been noted that said connecting device allows both to adjust the distance of the meter from the distribution manifold and to connect thereto manifold meters having different center distances between the inlet and outlet of the gas.

The possibility of connecting the gas outlet distribution pipe to the dielectric coupling 4 with different orientations makes the connecting device highly versatile.

The device thus conceived is susceptible of numerous modifications and variations, all of which are within the scope of the inventive concept; all the details may furthermore be replaced with other technically equivalent elements.

In practice, the materials employed, so long as they are compatible with the specific use, as well as the dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A detachable connecting device, particularly for gas meters and the like, characterized in that it comprises connecting means having a first end and a second end, said first end being connectable to the outlet of a gas meter, said second end being connectable to a gas distribution pipe in output from said meter, said connecting means being furthermore connectable to fixing means that are adapted to fix said connecting means, and said meter rigidly coupled thereto, to a gas distribution manifold.

2. A device according to claim 1, characterized in that said connecting means comprise a tubular body.

3. A device according to claims 1 and 2, characterized in that said first end of said tubular body is externally threaded and has a locking ring screwed thereon, said locking ring acting as an abutment element for a locking crown that is adapted to screw itself onto the outlet of said meter.

4. A device according to claims 1 and 2, characterized in that said second end is externally threaded and can be connected to a pipe for distributing gas from the outlet of said manifold, said connection being optionally provided by means of a dielectric coupling screwed on said second end.

5. A device according to claims 1 and 2, characterized in that said tubular body has an internally threaded cylindrical extension that lies opposite to said first end and allows connection to said fixing means.

6. A device according to claim 1, characterized in that said fixing means comprise a fixing collar adapted to clamp around said distribution manifold.

7. A device according to claims 5 and 6, characterized in that said fixing collar comprises a first half and a second half that can be mutually connected by means of bolts, said first half having a threaded pin that allows screw coupling to said internally threaded cylindrical extension of said tubular body.

8. A device according to claim 7, characterized in that a first locking nut and a second locking nut are screwed on said threaded pin, said first locking nut constituting the stroke limiter of said second locking nut on said threaded pin, said second locking nut allowing to adjust the amount of screwing or unscrewing of said cylindrical extension of the tubular body on said threaded pin.

9. A device according to claim 2, characterized in that said tubular body has an internally threaded opening in a position lying opposite to said second end, said opening being used as a gas pressure measurement point and being closed by a plug.

10. A device according to claim 9, characterized in that a cock provided with a ball valve can be connected to said internally threaded opening, said cock being adapted to interrupt the flow of gas towards the pressure gauge or other device.
